Europäisches Patentamt

European Patent Office

Office européen des brevets

(19)

(11) EP 0 545 291 B1

(12) EUROPEAN PATENT SPECIFICATION

(45) Date of publication and mention
of the grant of the patent:
12.08.1998 Bulletin 1998/33

(51) Int Cl.⁶: G06T 7/00

(21) Application number: 92120231.3

(22) Date of filing: 26.11.1992

(54) **Inspecting method for flexible thin object**

Inspektionsmethode für ein dünnes, flexibles Objekt

Méthode d'inspection d'un objet mince et flexible

(84) Designated Contracting States:
DE FR GB

(30) Priority: 29.11.1991 JP 342456/91

(43) Date of publication of application:
09.06.1993 Bulletin 1993/23

(73) Proprietors:
• YOZAN INC.
Tokyo 155 (JP)
• SHARP KABUSHIKI KAISHA
Osaka-shi, Osaka-fu 545 (JP)

(72) Inventor: Yamamoto, Makoto
Setagaya-ku, Tokyo 155 (JP)

(74) Representative: Grünecker, Kinkeldey,
Stockmair & Schwanhäusser Anwaltssozietät
Maximilianstrasse 58
80538 München (DE)

(56) References cited:
• PATENT ABSTRACTS OF JAPAN vol. 014, no.
498 (P-1124) 30 October 1990 30 October 1990 &
JP-A-02 204 881 ( CANON INC. ) 14 August 1990
• PATENT ABSTRACTS OF JAPAN vol. 015, no.
384 (P-1258) 27 September 1991 & JP-A-03 154
808 ( NEC CORP. ) 2 July 1991
• PATENT ABSTRACTS OF JAPAN vol. 012, no.
345 (P-759) 16 September 1988 & JP-A-03 101
973 ( NARUMI CHINA CORP. ) 6 May 1988
• PATENT ABSTRACTS OF JAPAN vol. 16, no. 147
(P-1336) 13 April 1992 & JP-A-04 003 271 ( NEC
CORP. ) 8 January 1992

## Description

The present invention relates to an inspecting method for a flexible thin object.

During the last few years, electric wire has become finer according to the necessity of small sizing and high density of electric apparatus. Nowadays, the diameters of such wire are often below 0.5 mm. When such wire is cut into small parts of predetermined length, automatic inspection of the length is very difficult because the parts are thin and curved irregularly. On the other hand, it is indispensable to inspect those parts by the human eye because it is not easy to stretch a curved thin object along a scale and it is difficult to stretch a line-type object without adding load to it and distorting it.

Since the industrial structure of our country has changed, it has become increasingly difficult to employee people to inspect the parts. Furthermore, the employees who have done the inspecting for many years are retiring now and it becomes difficult to find new employees in order to carry out the inspection.

The abstract of JP-A-2 204 881 discloses an image processing method for discriminating patterns from characters within a binarized image by analysing the length of code lines.

From the abstract of JP-A-3154 808 a pattern inspection instrument is known for detecting disconnections or short circuits. For this purpose it is suggested to provide a line-thinning process to the binary image data, further enlarging, and labelling end points and branch points of the pattern and finally comparing these points with those of a reference pattern.

It is the object of the present invention to provide a simplified method for inspecting the length of a flexible thin object.

This object is solved by the subject matter of claim 1.

According to the present invention, it is not necessary to stretch the flexible thin object; consequently, the object is not distorted. It is easy to realize the inspecting method of the present invention by hardware.

In the following a prefered embodiment of the present invention will be described in more detail by refering to the accompanied figures.

Figure 1 shows a flowchart of an embodiment.

Figure 2 shows an image of a thinned figure.

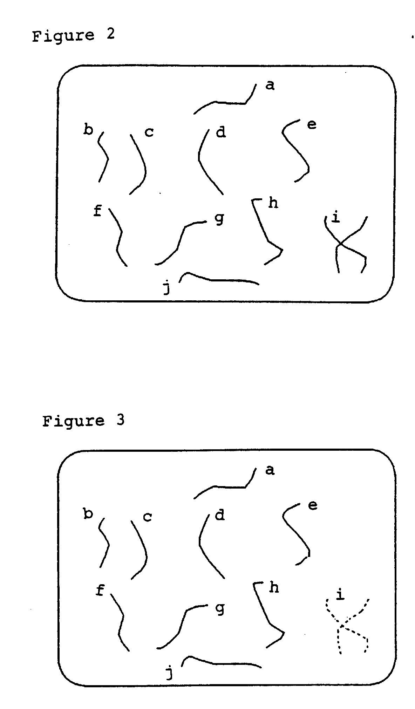

Figure 3 shows an image indicating a defective one as (i).

Figure 4 shows an image indicating a defective one as (a).

Figure 5 shows branches of connectedness 4.

Figure 6 shows branches of connectedness 3.

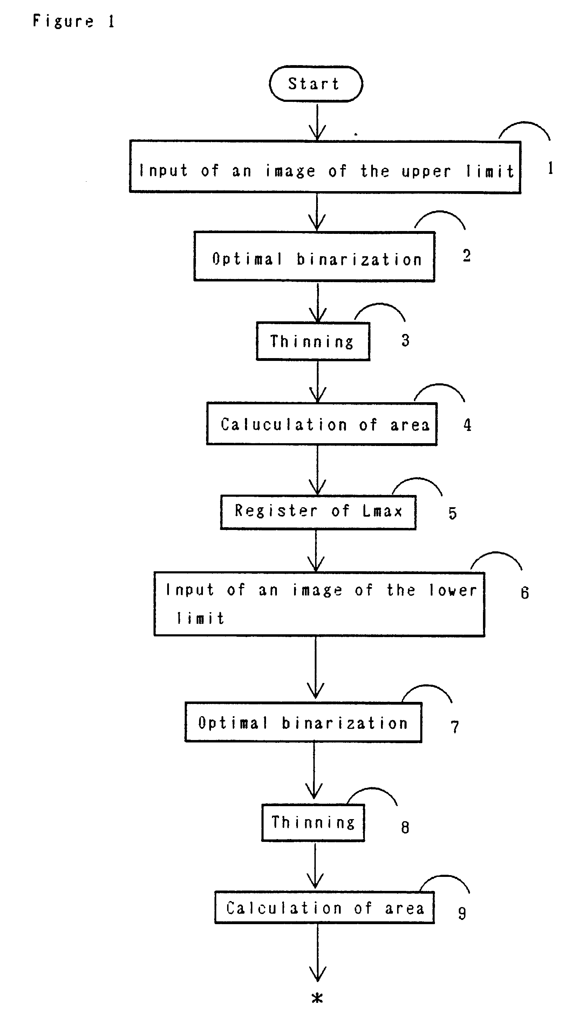

Figure 1 shows a flowchart for realizing the present invention. Explaining the steps from 1 to 10, they are the presteps of the inspection. In these presteps an upper limit and a lower limit of the area of a defectless object are predetermined.

A first possibility to register the upper and lower limit is to input an image of a defectless object with around the mean length and to add an corresponding errors to it.

A second possibility comprises the following steps:

Inputting an image of a flexible thin object with the upper limit area on step 1, binarizing it in optimum on step 2, thinning it on step 3, calculating the area of the thinned figure of the object on step 4 and registering this area as upper limit on step 5.

Inputting the image of a flexible thin object of the area with the lower limit on step 6 and repeating the steps 2 to 4 as new steps 7 to 9. In step 10 the lower limit of the area is registered.

Then, the preprocessings of the inspection are completed.

The message of starting inspection is indicated e.g. on a display.

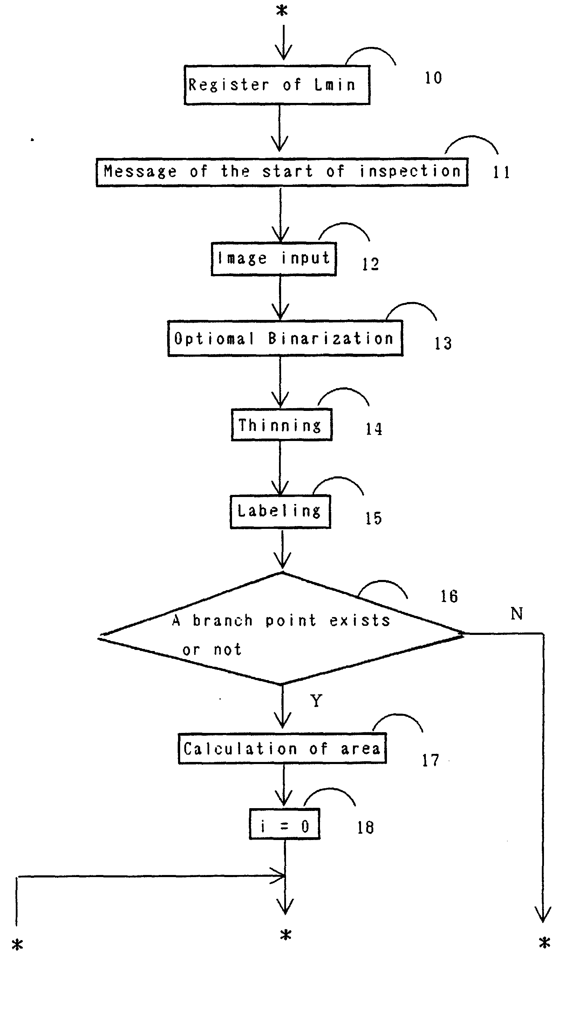

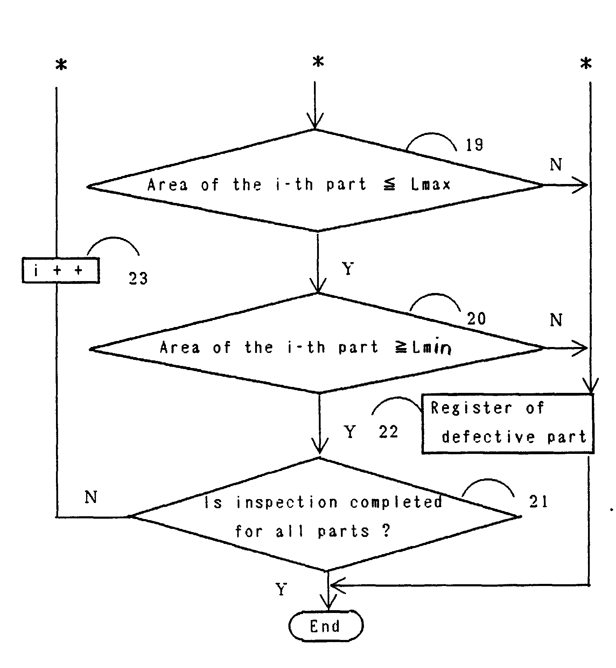

After inputting an image comprising a plurality of flexible thin objects to be processed on step 12, optimal binarization is performed on step 13. Thinning is performed on step 14 (Figure 2). "Thinning" is a process directed to obtain a linear figure of one pixel width from the figure of the object to be processed by reducing pixels from the periphery of a figure without changing the topology of the figure; the connectedness of a figure is not lost. When two flexible thin objects are overlapped and thinning is performed on it, the image is "i" in Figure 2.

Though shrinking is generated and the length of the linear object becomes short, the error of the length can be ignored in many cases because the number of thinnings is a few for a linear object.

Labeling is performed on step 15. "Labeling" expresses each figure with connectedness by different density. Representing figures from "a" to "j" by different density, for example figure "a" is represented by density 10, figure "b" by 20, figure "c" by 30, the figures are classified into groups. Even when a figure comprises 2 flexible thin objects as figure "h", they are recognized as 1 figure because of the connectedness and they are labeled by 1 density.

After the labeling, it is judged if a branch point exists or not in the image on step 16. It is possible to judge the existence of a branch point by examining the number of connectedness (Nc). The formula for it is shown below.

When the number of connectedness is 4, the formula is:

$$N_c{}^4 = \sum_k (P_k - P_k P_{k+1} P_{k+2})$$

When the number of connectedness is 8, the formula is:

$$N_c{}^8 = \sum_k (P_k - P_k P_{k+1} P_{k+2})$$

$$(k=1, \ 3, \ 5, \ 7)$$

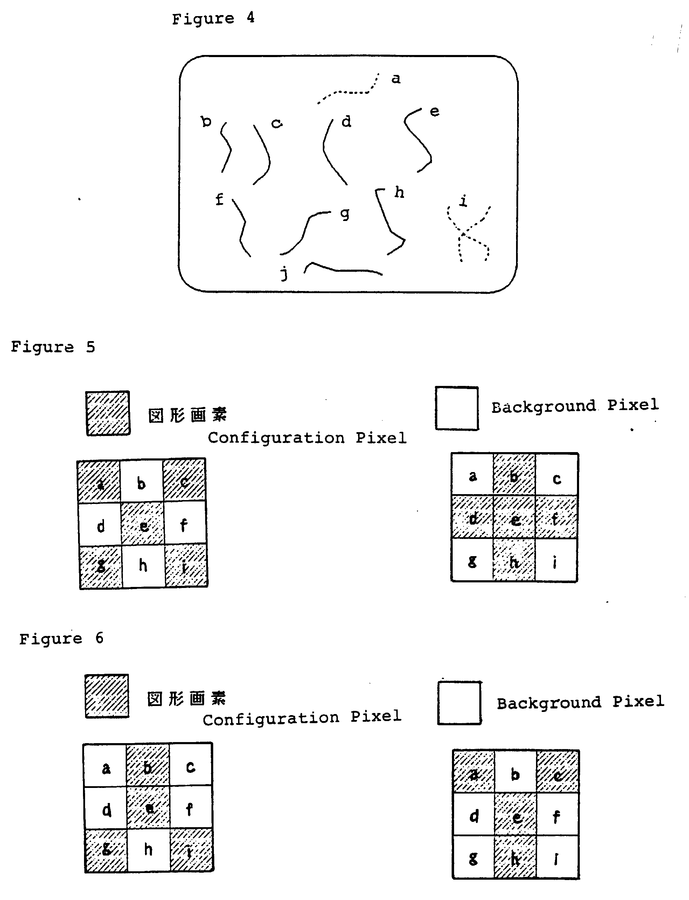

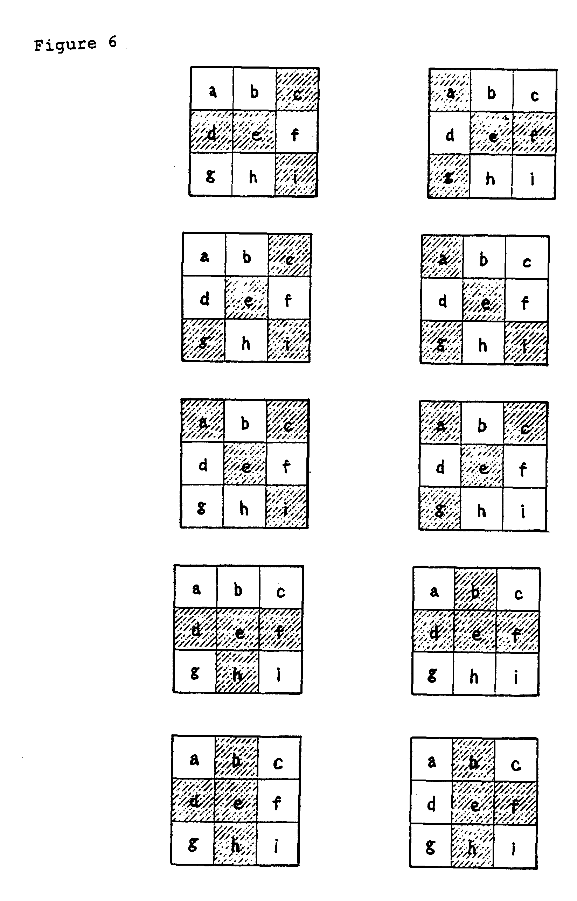

Figures 5 and 6 show the branches of a figure with connectedness 4 and 3, respectively.

When a branch is found, it is clarified that which figure comprises it (It is "i" in Figure 2, in this case.) and the figure is registered as a defective one (step 22).

All the figures are calculate their are except those regarded as defective on step 16 (step 17).

The area can be calculated by the histogram of the image. Counting the number of pixels of a labeled figure is equivalent to calculate area concerning a thinned image.

When the object to be processed is extrafine as a wire, the thinned figure keeping the topology of the original image has effective data of the length of it, not lost. Therefore, the area obtained by counting the number of pixels can be regarded as the length of the object to be processed.

The area of the figure is examined whether it is between the upper limit and the lower limit registered on step 5 and 10 (steps 19 and 20). The figure whose area is out of the range is registered as a defective one (step 22) as (a) in Figure 4. The processings from 19 is repeated until all the figures are performed these processings.

As mentioned, it is possible to inspect a flexible thin object without touching and stretching by the present invention. Therefore, inspection can be easily possible without distortion.

## Claims

1. An inspecting method for flexible thin objects comprising the steps of:

    i) inputting a digital image of flexible thin objects;

    ii) binarizing said image;

    iii) thinning each thin object within said binarized image by reducing pixels from the periphery of the object for obtaining a connected pixel string of one pixel width, representing the shape of the object;

    iv) labelling the pixel strings after thinning;

    v) calculating the area of each labelled pixel string by adding the number of pixels forming the respective string;

    vi) judging if said calculated area is within a predetermined range or not, and

    vii) judging each flexible thin object to be defectless if its area is within said predetermined range.

2. An inspecting method according to claim 1 wherein a flexible thin object is judged to be defective when a branch point has been detected within the labelled image of said object.

## Patentansprüche

1. Inspektionsverfahren für flexible dünne Objekte mit den Schritten:

    (i) Eingeben eines digitalen Bildes flexibler dünner Objekte;
    (ii) Binarisieren des Bildes;

(iii) Ausdünnen jedes dünnen Objektes innerhalb des binarisierten Bildes durch Abnehmen von Pixeln vom Umfang des Objektes, um eine verbundene Pixelreihe mit der Breite eines Pixels zu erhalten, welche die Form des Objektes darstellt;

(iv) Bezeichnen der Pixelreihen nach dem Ausdünnen;

(v) Berechnen der Fläche jeder bezeichneten Pixelreihe durch Addieren der Anzahl von Pixeln, welche die jeweilige Reihe bilden;

(vi) Beurteilen, ob die berechnete Fläche in einem bestimmten Bereich liegt, und

(vii) Beurteilen jedes flexiblen dünnen Objektes als fehlerlos, wenn seine Fläche sich in dem vorgegebenen Bereich befindet.

2. Inspektionsverfahren nach Anspruch 1, bei dem ein flexibles dünnes Objekt als fehlerhaft beurteilt wird, wenn ein Verzweigungspunkt innerhalb des bezeichneten Bildes des Objekts erfaßt worden ist.

**Revendications**

1. Méthode d'inspection d'objets minces et flexibles comprenant les étapes de :

i) entrée d'une image numérique d'objets minces et flexibles ;

ii) mise en binaire de ladite image ;

iii) amincissement de chaque objet mince dans ladite image en binaire par réduction d'éléments d'image à partir de la périphérie de l'objet pour obtenir une chaîne d'éléments d'image liés de la largeur d'un élément d'image, représentant la forme de l'objet ;

iv) étiquetage des chaînes d'éléments d'image après amincissement ;

v) calcul de la surface de chaque chaîne d'éléments d'image étiquetée par totalisation du nombre d'éléments d'image constituant la chaîne respective ;

vi) estimation si ladite surface calculée est dans une plage prédéterminée ou non ; et,

vii) estimation que chaque objet mince et flexible est sans défaut si sa surface est dans ladite plage prédéterminée.

2. Méthode d'inspection selon la revendication 1, dans laquelle un objet mince et flexible est considéré comme étant défectueux quand un point de branchement a été détecté dans l'image étiquetée dudit objet.

Figure 1

```
                    ┌─────────┐
                    │  Start  │
                    └─────────┘
                         │
                         ▼
        ┌──────────────────────────────────────┐
        │ Input of an image of the upper limit │  1
        └──────────────────────────────────────┘
                         │
                         ▼
          ┌───────────────────────────┐
          │   Optimal binarization    │  2
          └───────────────────────────┘
                         │
                         ▼
              ┌───────────────┐
              │   Thinning    │  3
              └───────────────┘
                         │
                         ▼
          ┌───────────────────────┐
          │  Caluculation of area │  4
          └───────────────────────┘
                         │
                         ▼
            ┌─────────────────────┐
            │   Register of Lmax  │  5
            └─────────────────────┘
                         │
                         ▼
        ┌──────────────────────────────────────┐
        │ Input of an image of the lower        │  6
        │ limit                                 │
        └──────────────────────────────────────┘
                         │
                         ▼
          ┌───────────────────────────┐
          │   Optimal binarization    │  7
          └───────────────────────────┘
                         │
                         ▼
              ┌───────────────┐
              │   Thinning    │  8
              └───────────────┘
                         │
                         ▼
          ┌───────────────────────────┐
          │   Calculation of area     │  9
          └───────────────────────────┘
                         │
                         ▼
                         *
```

5

```
                    *
                    |
                    ↓
        ┌─────────────────────┐
        │  Register of Lmin   │        10
        └─────────────────────┘
                    |
                    ↓
    ┌────────────────────────────────────┐
    │ Message of the start of inspection │    11
    └────────────────────────────────────┘
                    |
                    ↓
            ┌───────────────┐
            │  Image input  │    12
            └───────────────┘
                    |
                    ↓
        ┌───────────────────────────┐
        │  Optiomal Binarization    │    13
        └───────────────────────────┘
                    |
                    ↓
            ┌───────────────┐
            │   Thinning    │    14
            └───────────────┘
                    |
                    ↓
            ┌───────────────┐
            │   Labeling    │    15
            └───────────────┘
                    |
                    ↓
              A branch point exists        16        N
                    or not
                    |
                    Y
                    ↓
        ┌───────────────────────────┐
        │    Calculation of area    │    17
        └───────────────────────────┘
                    |
                    ↓
            ┌───────────────┐
            │    i = 0      │    18
            └───────────────┘
                    |
                    ↓
    *               *                              *
```

Figure 2

Figure 3

Figure 4

Figure 5

图形画素
Configuration Pixel

Background Pixel

Figure 6

图形画素
Configuration Pixel

Background Pixel

Figure 6